Europäisches Patentamt

European Patent Office

Office européen des brevets

(19)

(11) Numéro de publication: **0 084 498**

**A2**

(12) **DEMANDE DE BREVET EUROPEEN**

(21) Numéro de dépôt: **83400107.5**

(22) Date de dépôt: **17.01.83**

(51) Int. Cl.³: **F 16 J 15/12**

(30) Priorité: **19.01.82 FR 8200748**

(43) Date de publication de la demande:
**27.07.83 Bulletin 83/30**

(84) Etats contractants désignés:
**DE GB IT**

(71) Demandeur: **SOCIETE ANONYME D'EXPLOITATION DES JOINTS MEILLOR**

**F-87140 Nantiat(FR)**

(72) Inventeur:
**L'inventeur a renonce a sa designation**

(74) Mandataire: **Descourtieux, Philippe et al,
CABINET BEAU de LOMENIE 55 rue d'Amsterdam
F-75008 Paris(FR)**

(54) Procédé pour la fabrication de joints armés, notamment de joints de culasse.

(57) Procédé pour la fabrication de joints armés, par exemple de joints pour culasse de moteurs selon lequel, après enrobage d'une armature (5) avec un matériau de revêtement composite, par exemple à base de fibres, on enlève une partie au moins de cet enrobage dans au moins une zone (6) du joint.

Fig.2

EP 0 084 498 A2

Procédé pour la fabrication de joints armés, notamment de joints de culasse.

On sait que la fabrication des joints armés comporte l'enrobage d'une armature, en général métallique, au moyen d'un matériau de revêtement composite tel, par exemple, qu'un matériau à base de fibres, notamment d'amiante, liées de façon convenable. Les armatures peuvent elles-mêmes présenter des structures diverses et, en particulier, peuvent être raidies par des ondulations, des perforations ou analogues.

On sait également que certains joints du type rappelé ci-dessus, et notamment des joints pour culasses de moteur, sont susceptibles de supporter des conditions de travail très sévères. On constate, en particulier, que le matériau composite enrobant l'armature, tout en assurant en général une résistance convenable à l'usure, est détérioré dans certaines zones et n'assure plus une étanchéité suffisante. L'absence d'étanchéité peut également résulter de la déformation des pièces assemblées, qui diminue le serrage sur le joint.

Pour remédier à ces inconvénients, on a déjà eu l'idée, exposée notamment dans la demande de brevet publiée FR-2 367 960, de réaliser des alvéoles dans l'enrobage de l'armature. Toutefois cette technique ne donne pas entière satisfaction.

On a également eu l'idée, exposée notamment dans les demandes de brevets publiées FR-2 366 113 et 2 372 012, de réaliser les alvéoles précitées sous forme de rainures et d'y placer un revêtement de caractéristiques appropriées, différentes de celles de l'enrobage de l'armature. Là encore la technique antérieure ne donne pas satisfaction. D'une part, le revêtement additionnel adhère insuffisamment sur l'enrobage, car la rainure destinée à le recevoir est réalisée par simple déformation en creux de l'une des faces du joint ; d'autre part, une déformation en relief apparaît sur l'autre face du joint, dans l'enrobage initial de sorte que les caractéristiques du joint sont différentes sur les deux faces, ce qui est gênant dans certains cas.

La présente invention a donc pour but de remédier aux inconvénients, évoqués plus haut, des joints armés, notamment des joints pour culasse de moteurs, tout en évitant les écueils rencontrés dans les solutions déjà proposées. A cet effet, on a eu l'idée d'usiner localement le revêtement d'enrobage du joint, en vue de revêtir, si nécessaire, les zones ainsi usinées par un matériau de caractéristiques différentes de celles de l'enrobage initial, notamment par un élastomère. On améliore ainsi très sensiblement l'étanchéité obtenue par les joints du type en question, en particulier en disposant dans des zones prédéterminées le second revêtement.

La présente invention a donc pour objet un procédé pour la fabrication de joints armés du type rappelé ci-dessus selon lequel, après enrobage d'une armature avec un matériau de revêtement composite, on enlève une partie au moins de cet enrobage initial dans au moins une zone du joint, l'enlèvement pouvant être effectué jusqu'à dénudation complète de l'armature dans la zone considérée.

Ainsi l'usinage par enlèvement de matière évite les déformations des faces du joint tout en facilitant l'accrochage ultérieur d'un autre revêtement, chaque fois que cela est jugé nécessaire.

Les machines-outils actuelles ne permettent pas d'usiner facilement les faces des joints sans risquer la détérioration de l'armature. C'est pourquoi, selon un mode d'exécution avantageux du procédé selon l'invention, l'enlèvement de l'enrobage initial du joint est réalisé de préférence en balayant la zone correspondante du joint par un faisceau de lumière cohérente (laser) dont la puissance est réglée en fonction de l'épaisseur d'enrobage à enlever.

Grâce à l'invention, il est possible de réaliser facilement les zones du joint, sur l'une et/ou l'autre de ses faces, destinées à recevoir éventuellement un revêtement approprié de caractéristiques différentes de celles de l'enrobage initial. Pour en faciliter l'accrochage, il sera judicieux, dans certains cas, de prévoir un usinage complémentaire desdites zones, soit dans l'enrobage initial qui subsiste, soit dans l'armature elle-même, si celle-ci a été totalement ou partiellement dénudée. Ce sera notamment le cas des joints à armature plane dans laquelle il sera créé des picots ou analogues.

L'invention s'étend bien entendu aux joints fabriqués conformément au procédé ci-dessus défini.

L'invention sera mieux comprise et diverses caractéristiques secondaires ainsi que ses avantages apparaîtront au cours de la description qui va suivre, en référence au dessin annexé, de quelques modes de réalisation donnés uniquement à titre d'exemples.

Sur le dessin,

la figure 1 est une vue partielle en plan d'un joint armé, montrant une zone dont l'enrobage initial doit être modifié ;

la figure 2 est une vue en coupe suivant II/II de la figure 1 après enlèvement partiel de l'enrobage initial ;

la figure 3 est une variante de la figure 2 ;

la figure 4 est une vue en coupe suivant II/II de la figure 1 après adjonction d'un revêtement ; et

la figure 5 est une variante de la figure 4.

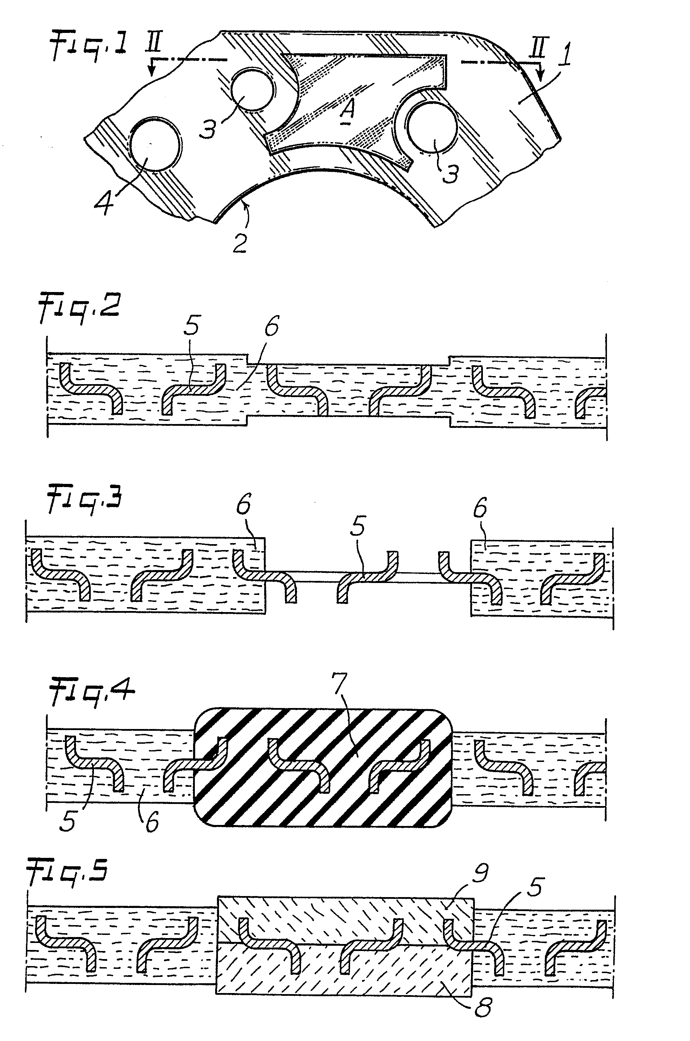

Si l'on se reporte à la figure 1, on voit une portion 1 d'un joint de culasse pour moteur présentant une découpe 2 pour le passage d'un piston ainsi que des trous 3 permettant la continuité des conduits de circulation d'un fluide de refroidissement ainsi qu'un trou 4 pour le passage d'un goujon de fixation.

On a constaté qu'en l'absence de précautions, certaines zones et notamment les zones éloignées des goujons de fixation peuvent être détériorées ou seulement être insuffisamment serrées dans certaines conditions de fonctionnement, malgré la rigidité du joint dont l'armature 5, visible sur les figures 2 à 5, est enrobée d'un matériau composite 6, par exemple à base de fibres d'amiante convenablement liées. Dans l'exemple représenté au dessin, une telle zone a été délimitée par un tracé et désignée par la référence A.

Il est apparu intéressant de supprimer, dans la zone A, l'enrobage initial 6 sur une épaisseur convenable, puis éventuellement de le remplacer, sur l'une et/ou sur l'autre face du joint, par un matériau de caractéristiques différentes et appropriées aux conditions locales et notamment à la résistance aux détériorations.

Comme on l'a déjà indiqué, l'enlèvement de l'enrobage initial sera avantageusement obtenu par le balayage de la zone A, sur une face, puis éventuellement sur l'autre, par un faisceau de lumière cohérente (laser). La puissance du faisceau sera réglée en fonction de la vitesse de balayage et de la profondeur désirée de l'épaisseur d'enrobage 6 à enlever. Ce balayage provoque un phénomène analogue à la gravure en détruisant localement l'enrobage initial.

On peut donc obtenir, après l'opération, soit une simple diminution de l'épaisseur de l'enrobage 6 dans la zone A (figure 2), laissant cependant l'armature noyée dans son enrobage et même une dénudation complète de l'armature 5 (figure 3).

La zone A peut présenter tout contour désiré, et ce contour peut être différent sur les deux faces du joint. De même la diminution de l'épaisseur peut varier d'une face à l'autre du joint.

Après l'opération d'enlèvement total ou partiel de l'enrobage initial 6 dans la zone A, on peut procéder à un usinage approprié de l'enrobage subsistant et/ou de l'armature dénudée pour faciliter l'accrochage ultérieur du revêtement de remplacement.

Enfin, chaque fois que cela sera jugé utile, et notamment en cas de dénudation complète de l'armature 5, celle-ci sera à nouveau noyée dans un matériau de remplacement, tel par exemple qu'un élastomère 7 (figure 4). Dans ce cas particulier, on peut noter qu'il est inutile de traiter l'armature pour assurer l'adhérence de l'élastomère puisque ce dernier est accroché mécaniquement en passant à travers les orifices ménagés dans l'armature. Dans certaines applications, deux matériaux de remplacement différents 8 et 9 peuvent être utilisés sur chacune des faces du joint (figure 5).

On notera également que le procédé peut être avantageusement utilisé dans les zones entourant l'orifice 2 correspondant au passage des pistons. On sait en effet qu'une garniture sertie est généralement prévue sur la périphérie de l'orifice, laquelle doit présenter une dureté différente de celle de l'enrobage disposé sur les autres zones du joint. Le procédé selon l'invention permet de réaliser facilement cette modification de la consistance du revêtement de l'armature à la périphérie de l'orifice 2.

REVENDICATIONS

1.     Procédé pour la fabrication de joints armés, par exemple de joints pour culasse de moteurs, caractérisé en ce que, après enrobage d'une armature (5) avec un metériau de revêtement composite, par exemple à base de fibres, on enlève une partie au moins de cet enrobage dans au moins une zone (6) du joint, en balayant ladite zone du joint par un faisceau de lumière cohérente (laser) dont la puissance est réglée en fonction de l'épaisseur d'enrobage à enlever.

2.     Procédé selon la revendication 1, caractérisé en ce que l'enlèvement de l'enrobage du joint est effectué sur une seule face du joint.

3.     Procédé selon la revendication 1, caractérisé en ce que l'enrobage du joint est effectué sur les deux faces du joint.

4.     Procédé selon l'une quelconque des revendications précédentes, caractérisé en ce que l'enlèvement de l'enrobage est effectué jusqu'à la dénudation de l'armature.

5.     Procédé selon la revendication 4, caractérisé en ce que la dénudation de l'armature est complète dans au moins une zone prédéterminée du joint.

6.     Procédé selon l'une quelconque des revendications 1 à 5, caractérisé en ce qu'on remplace l'enrobage enlevé par un autre matériau de caractéristiques différentes, notamment par un élastomère.

7.     Procédé selon l'une quelconque des revendications 1 à 6, caractérisé en ce que, après l'enlèvement d'une partie au moins de l'enrobage initial et avant son remplacement par l'autre matériau, on effectue un usinage de l'enrobage restant et/ou de l'armature en vue de faciliter l'accrochage ultérieur de l'autre matériau.

Fig.1

Fig.2

Fig.3

Fig.4

Fig.5

1/1   0084498